(19) Europäisches Patentamt
European Patent Office
Office européen des brevets

(11) Veröffentlichungsnummer: **0 304 787 B1**

(12) **EUROPÄISCHE PATENTSCHRIFT**

(45) Veröffentlichungstag der Patentschrift: **18.11.93**

(51) Int. Cl.[5]: **C08L 69/00**, C08L 67/02, //(C08L69/00,67:02,51:00), (C08L67/02,69:00,51:00)

(21) Anmeldenummer: **88113329.2**

(22) Anmeldetag: **17.08.88**

# (54) Formmassen aus Polycarbonat und Polyalkylenterephthalat mit verbesserter Fliessnahtfestigkeit.

(30) Priorität: **27.08.87 DE 3728604**

(43) Veröffentlichungstag der Anmeldung: **01.03.89 Patentblatt 89/09**

(45) Bekanntmachung des Hinweises auf die Patenterteilung: **18.11.93 Patentblatt 93/46**

(84) Benannte Vertragsstaaten: **DE FR GB IT**

(56) Entgegenhaltungen:
**EP-A- 0 131 196** **EP-A- 0 135 904**
**EP-A- 0 158 822** **EP-A- 0 230 914**
**EP-A- 0 270 950** **WO-A-87/02999**
**FR-A- 2 371 481**

(73) Patentinhaber: **BAYER AG**
**D-51368 Leverkusen(DE)**

(72) Erfinder: **1Wittmann, Dieter, Dr.**
**Doerperhofstrasse 15**
**D-4150 Krefeld(DE)**
Erfinder: **Kress, Hans-Jürgen, Dr. c/o Mobay Corporation**
**Plastic and Rubber Devision**
**Mobay Road**
**Pittsburg, PA 15205(US)**
Erfinder: **Ott, Karl-Heinz, Dr.**
**Paul-Klee-Strasse 54**
**D-5090 Leverkusen(DE)**
Erfinder: **Lindner, Christian, Dr.**
**Riehlerstrasse 200**
**D-5000 Köln 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 304 787 B1

## Beschreibung

Die Erfindung betrifft thermoplastische Formmassen aus aromatischem Polycarbonat, Polyalkylenterephthalat und speziellem Pfropfpolymerisat, ein Verfahren zur Herstellung dieser Formmassen durch Mischen der Komponenten bei erhöhter Temperatur sowie die Verwendung der Formmassen zur Herstellung von Formkörpern, vornehmlich durch Spritzguß.

Formmassen aus aromatischem Polycarbonat, Polyalkylenterephthalat und kautschukelastischem Polymerisat sind bekannt (US-PS 3 864 428, EP-A 25 920, 64 648, 110 222, JP-A 59-166 556). Sie lassen sich zu hochschlagzähen Formkörpern verarbeiten.

Überraschenderweise wurde nun gefunden, daß Formmassen aus aromatischem Polycarbonat, Polyalkylenterephthalat und kautschukelastischem Polymerisat eine besonders vorteilhafte Kombination von Fließnahtfestigkeit und Tieftemperaturzähigkeit besitzen, wenn man ganz spezielle kautschukelastische Pfropfpolymerisate wählt.

Gegenstand der Erfindung sind thermoplastische Formmassen aus

A. 10 bis 95, vorzugsweise 50 bis 90, Gew.-% aromatischem Polycarbonat,

B. 5 bis 90, vorzugsweise 10 bis 50, Gew.-% Polyalkylenterephthalat und

C. 1 bis 70, vorzugsweise 3 bis 50, insbesondere 5 bis 35, Gew.-% Pfropfpolymerisat,

wobei sich die obigen Prozentangaben jeweils auf die Summe der Komponenten A und B beziehen, dadurch gekennzeichnet, daß Komponente C ein Pfropfpolymerisat aus

5 bis 90, vorzugsweise 20 bis 80, Gewichtsteilen Pfropfauflage aus

C.2 einer Mischung aus

C.2.1 50 bis 95 Gew.-Teilen Styrol, α-Methylstyrol, $C_1$-$C_4$-Alkyl- oder Halogen-kernsubstituiertem Styrol, Methylmethacrylat oder Mischungen daraus und

C.2.2 5 bis 50 Gew.-Teilen Acrylnitril, Methacrylnitril, Methylmethacrylat, Maleinsäureanhydrid, $C_1$-$C_4$-Alkyl bzw. Phenyl-N-substituiertem Maleinimid oder Mischungen daraus sowie

C.2.3 1 bis 40, vorzugsweise 3 bis 20, Gew.-Teilen Acrylsäureester eines primären oder sekundären einwertigen aliphatischen $C_2$-$C_{10}$-Alkohols und/oder

C.2.4 0,1 bis 10, vorzugsweise 0,3 bis 4, Gew.-Teilen Acryl- oder Methacrylsäureester des tert.-Butanols auf

C.3 10 bis 95, vorzugsweise 20 bis 80, Gew.-Teilen Polymerisat mit einer Glasübergangstemperatur unter -10 °C, vorzugsweise unter - 20 °C ist.

Unter aromatischen Polycarbonaten A im Sinne dieser Erfindung werden Homopolycarbonate, Copolycarbonate und Mischungen dieser Polycarbonate verstanden, denen z.B. mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole

sowie deren kernalkylierte und kernhalogenierte Derivate. Diese und weitere geeignete Diphenole sind z.B. in den US-PS 3 028 365, 3 275 601, 3 148 172, 3 062 781, 2 991 273, 3 271 367, 2 999 835, 2 970 131 und
2 999 846, in den DE-OS 1 570 703, 2 063 050, 2 063 052, 2 211 956, 2 211 957, der FR-PS 1 561 518 und in der Monographie von H. Schnell, "Chemistry and Physics of Polycarbonates", Interscience Publishers, New York, 1964, beschrieben.

Bevorzugte Diphenole sind z.B.

4,4'-Dihydroxydiphenyl,
2,4-Bis-(4-hydroxyphenyl)-2-methylbutan,
α,α'-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)propan und
1,1-Bis-(4-hydroxyphenyl)-cyclohexan.

Im allgemeinen entsprechen die für die Herstellung der aromatischen Polycarbonate A bevorzugten Diphenole der Formel

HO - Z - OH (I),

worin Z einen zweiwertigen ein- oder mehrkernigen aromatischen $C_6$-$C_{30}$-Rest bedeutet, wobei die beiden OH-Gruppen direkt an je ein C-Atom eines aromatischen Systems gebunden sind.

Besonders bevorzugte Diphenole entsprechen der Formel

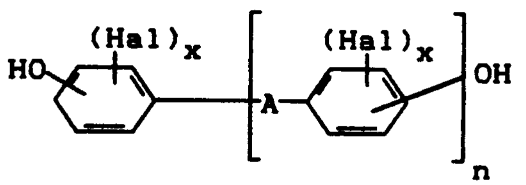

(II)

worin

A eine Einfachbindung, $C_1$-$C_5$-Alkylen, $C_2$-$C_5$-Alkyliden, $C_5$-$C_6$-Cycloalkylen oder -alkyliden, -O-, -S-,

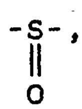

$-SO_2-$ oder

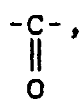

Hal Chlor oder Brom,
x Null, 1 oder 2 und
n Null oder 1 bedeuten.

Die aromatischen Polycarbonate A umfassen auch Blockcopolycarbonate, die 1 bis 20, vorzugsweise 1,5 bis 15, insbesondere 2 bis 10, Gew.-%, bezogen auf Diphenolreste des Copolycarbonats A, einkondensierte Reste von Diphenolen der Formel

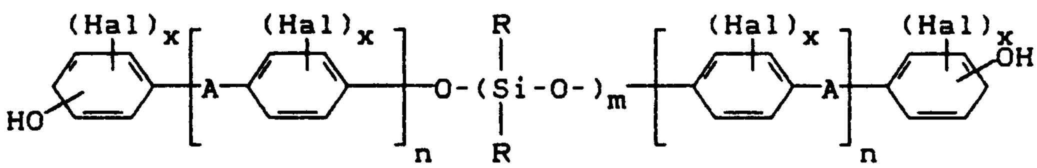

(III)

enthalten,
worin

| | |
|---|---|
| A, Hal, x und n | die oben angegebene Bedeutung haben, |
| m | eine ganze Zahl von 5 bis 100, vorzugsweise von 20 bis 80, und |
| R | $C_1$-$C_{20}$-Alkyl, vorzugsweise Methyl, Ethyl, Propyl, n-Butyl, tert.-Butyl, und $C_6$-$C_{20}$-Aryl, vorzugsweise Phenyl, bedeuten mit der Maßgabe, daß dei Substituenten R nicht nur in der obigen Formel (III), sondern an jedem Siliciumatom des Blockcopolycarbonats unabhängig voneinander eine der Bedeutungen innerhalb der Definition für R annehmen können. |

Wenn als aromatische Polycarbonate A Mischungen mit wenigstens einem Blockcopolycarbonat auf Basis eines Diphenols der Formel (III) eingesetzt werden, soll der Anteil einkondensierter Diphenolreste (III) vorzugsweise 1 bis 20 Gew.-%, bezogen auf die Gesamtmenge sämtlicher Diphenolreste der verwendeten aromatischen Polycarbonate A, betragen.

Die Herstellung von Blockcopolycarbonaten auf Basis von Diphenolen der Formel (III) wird beispielsweise in der DE-OS 33 34 872 und in der US-PS 3 821 325 beschrieben.

Die aromatischen Polycarbonate A können durch den Einsatz geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Polycarbonate A besitzen in der Regel mittlere Molekulargewichte $M_w$ von 10 000 bis 200 000, vorzugsweise von 20,000 bis 80 000, ermittelt durch Lichtstreuung.

Zur Einstellung des Molekulargewichts $M_w$ der Polycarbonate A können in bekannter Weise Kettenabbrecher, wie beispielsweise Phenole, Halogenphenole oder Alkylphenole, in den berechneten Mengen eingesetzt werden.

Besonders bevorzugte Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten gemäß DE-OS 3 506 472, wie 3,5-Di-tert.-butylphenol, p-iso-Octylphenol, p-tert.-Octylphenol, p-Dodecylphenol, 2-(3,5-Dimethylheptyl)-phenol und 4-(3,5-Dimethyl-heptyl)-phenol.

Die Menge an einzusetzenden Kettenabbrechern beträgt im allgemeinen zwischen 0,5 und 10 Mol-%, bezogen auf die Summe der jeweils eingesetzten Diphenole.

Besonders bevorzugte aromatische Polycarbonate A sind neben Bisphenol-A-Homopolycarbonat die Copolycarbonate aus Bisphenol-A mit bis zu 15 Mol-%, bezogen auf die Gesamtsumme Diphenole, an 2,2-Bis-(3,5-dibrom-4-hydroxyphenyl)-propan und die Copolycarbonate aus Diphenolen der Formel (II) mit 1 bis 20 Gew.-% Diphenolen der Formel (III), vorzugsweise mit A = 2.2-Propylen, bezogen auf die Summe der Diphenole (II) und (III).

Polyalkylenterephthalate B im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte. Sie lassen sich nach bekannten Methoden herstellen (Kunststoff-Handbuch, Bd. VIII, S. 695 ff, Carl Hanser Verlag, München, 1973).

Bevorzugte Polyalkylenterephthalate B enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate B können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacin-, Azelain-, Cyclohexandiessigsäure.

Die bevorzugten Polyalkylenterephthalate B können neben Ethylenglykol- bzw. Butandiol-1,4-resten bis zu 20 Mol-%, vorzugsweise bis zu 10 Mol-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-$\beta$-hydroxyethoxyphenyl)-propan und 2,2-Bis-(4-hydroxypropoxyphenyl)-propan (DE-OS 24 07 647, 24 07 776, 27 15 932).

Die Polyalkylenterephthalate B können durch Einbau relativ kleiner Mengen 3- oder 4-wertiger Alkohole oder 3- oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate B, die allein aus Terephthalsäure oder deren reaktionsfähigen Derivaten (z.B. deren Dialkylestern) und Ethylenglykol und/oder Butandiol-1,4 hergestellt worden sind, und Mischungen dieser Polyalkylenterephthalate.

Die als Komponente B vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gewichtsteile) bei 25 °C.

Als Komponente C.3 bevorzugte Produkte umfassen kautschukelastische Polymerisate aus mindestens einem der folgenden Monomeren:
Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der organischen Chemie" (Houben-Weyl), Bd. 14/1, Georg Thieme Verlag, Stuttgart 1961, S. 393-406 und in C.B. Bucknall, "Toughened Plastics", Appl. Science Publishers, London 1977, beschrieben sind.

Bevorzugte Polymerisate C.3 umfassen vor allem Polychloropren, Polyisopren, EPDM-Kautschuke aus Ethylen, Propylen und einem - vorzugsweise nicht konjugierten - Dien, Ethylen/Vinylacetat-Copolymerisate und Butadien/Styrol-Copolymerisate, die bis zu 30 Gew.-%, bezogen auf Butadien/Styrol-Copolymerisat, copolymerisierte Einheiten von (Meth-)Acrylsäure-$C_1$-$C_4$-alkylestern (wie z.B. Methylacrylat und -methacrylat, Ethylacrylat und -methacrylat) enthalten.

Besonders bevorzugte Polymerisate C.3 sind Polybutadiene und Acrylatkautschuke.

Bevorzugte Polybutadiene C.3 sind Polymerisate mit mindestens 50 Gew.-%, bezogen auf Polybutadien, einpolymerisierten Butadienresten und bis zu 50 Gew.-%, bezogen auf Polybutadien, einpolymerisierten Resten anderer ethylenisch ungesättigter Monomerer, wie z.B. Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und Vinylether. Eine bevorzugte Pfropfgrundlage C.3 besteht aus reinem Polybutadien.

Bevorzugte Acrylatkautschuke C.3 sind Polymerisate aus Acrylsäurealkylestern, gegebenenfalls mit bis zu 30 Gew.-%, bezogen auf Acrylatkautschuk, anderer polymerisierbarer ethylenisch ungesättigter Monomerer. Zu den bevorzugten polymerisierbaren Acrylsäureestern gehören $C_1$-$C_8$-Alkylester, beispielsweise Methyl-, Ethyl-, Butyl-, Octyl- und 2-Ethylhexylester; Halogenalkylester, vorzugsweise Halogen-$C_1$-$C_8$-alkylester, wie Chlorethylacrylat; sowie Mischungen dieser Monomeren.

Bevorzugte "andere" polymerisierbare ethylenisch ungesättigte Monomere, die neben den Acrylsäureestern gegebenenfalls zur Herstellung der Acrylatkautschuke C.3 dienen können, sind z.B. Acrylnitril, Styrol, $\alpha$-Methylstyrol, Acrylamide, Vinyl-$C_1$-$C_6$-alkylether, Methylmethacrylat, Butadien.

Die Polymerisate C.3 sind vorzugsweise mindestens teilweise vernetzt, d.h. sie besitzen einen Gelgehalt von mindestens 60, vorzugsweise mindestens 70, insbesondere mindestens 80 Gew.-%. Der Gelgehalt von Polybutadienen wird in Toluol, der von Acrylatkautschuken in Dimethylformamid, jeweils bei 25 °C bestimmt (M. Hoffmann, H. Krömer, R. Kuhn, Polymeranalytik I und II, Georg Thieme Verlag, Stuttgart 1977).

Zur Vernetzung der Polymerisate C.3, vorzugsweise der Acrylatkautschuke C.3, können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trinvinylcyanurat, Triacryloylhexahydro-s-triazin, Triallylbenzole.

Die Menge der vernetzenden Monomeren beträgt vorzugsweise 0,02 bis 5, insbesondere 0,05 bis 2, Gew.-%, bezogen auf Pfropfgrundlage C.3.

Bei cyclischen vernetzenden Monomeren mit mindestens 3 ethylenisch ungesättigten Gruppen ist es vorteilhaft, die Menge auf unter 1 Gew.-% der Pfropfgrundlage C.3 zu beschränken.

Die Polymerisate C.3 besitzen vorzugsweise mittlere Teilchengrößen $d_{50}$ von 0,05 bis 5, insbesondere von 0,075 bis 1, $\mu$m.

Die mittlere Teilchengröße $d_{50}$ ist der Durchmesser, oberhalb und unterhalb dessen jeweils 50 Gew.-% der Teilchen liegen. Er kann mittels UltrazentrifugenMessungen (W. Scholtan, H. Lange, Kolloid. Z. und Z. Polymere 250 (1972), 782 bis 796) bestimmt werden.

Bevorzugte Pfropfmonomere C.2.3 sind z.B. Ethyl-, Propyl-, Butyl-, Hexyl- und 2-Ethylhexylacrylat, bevorzugtes Pfropfmonomer C. 2.4 ist t-Butylacrylat.

Bei Verwendung der Pfropfmonomeren C.2 ist es für den Erfolg der Erfindung ausschlaggebend, daß mindestens eine der Komponenten C.2.3 bzw. C.2.4 mitverwendet wird.

Übliche Herstellungsverfahren für die Pfropfpolymerisate C sind Emulsions-, Lösungs-, Masse- und Suspensionspolymerisation.

Die Pfropfmonomeren C.2 des Pfropfproduktes C werden vorzugsweise durch Polymerisation in Gegenwart eines Latex (Emulsion) der Pfropfgrundlage C.3 aufgepfropft. Die Polymerisation kann durch Radikalinitiatoren initiiert werden, z.B. mit Persulfaten, Peroxiden, Percarbonaten, Perestern, insbesondere aber mit wasserlöslichen Initiatoren, wie Persulfaten oder Redoxinitiatorsystemen. Diese Polymerisationsverfahren sind an sich bekannt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomeren in Gegenwart der Pfropfgrundlagen gewonnen werden.

Die erfindungsgemäßen Formmassen können übliche Additive, wie Fließhilfsmittel, Entformungsmittel, Nukleiermittel, Stabilisatoren, Antistatika, Füll- und Verstärkungsstoffe, Flammschutzmittel sowie Farbstoffe und Pigmente enthalten.

Die gefüllten bzw. verstärkten Formmassen können bis zu 60 Gew.-%, bezogen auf die verstärkte Formmassen, Füll-und/oder Verstärkungsstoffe enthalten. Bevorzugte Verstärkungsstoffe sind Glasfasern. Bevorzugte Füllstoffe die auch verstärkend wirken können, sind Glaskugeln, Glimmer, Silikate, Quarz, Talkum, Titandioxid, Wollastonit.

Die mit Flammschutzmitteln ausgerüsteten Formmassen enthalten Flammschutzmittel in einer Konzentration von im allgemeinen weniger als 30 Gew.-%, bezogen auf die flammgeschützten Formmassen.

Die erfindungsgemäßen Formmassen können durch Mischen der Komponenten bei erhöhter Temperatur, vorzugsweise im Bereich von 200 bis 330 °C, hergestellt werden, also z.B. in üblichen Vorrichtungen, wie Innenknetern, Extrudern oder Doppelwellenschnecken, schmelzcompoundiert oder schmelzextrudiert werden. Die Komponenten können gleichzeitig oder nacheinander in das Mischaggregat eingeführt werden.

Weiterer Gegenstand der Erfindung ist also ein Verfahren zur Herstellung der erfindungsgemäßen Formmassen durch Mischen der Komponenten bei erhöhter Temperatur.

Die erfindungsgemäßen Formmassen können zur Herstellung von Formkörpern jeder Art verwendet werden. Ein bevorzugtes Verarbeitungsverfahren ist der Spritzguß. Beispiele für Formkörper sind Gehäuseteile jeder Art, z.B. für Haushaltsgeräte, wie Saftpressen, Kaffeemaschinen und Mixer, zum anderen Abdeckplatten für den Bausektor und Teile für den Kfz-Sektor. Sie werden außerdem auf dem Gebiet der Elektrotechnik, z.B. für Steckerleisten, eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Weiterer Gegenstand der Erfindung ist also die Verwendung der Formmassen zur Herstellung von Formkörpern.

Die in den nachfolgenden Beispielen angegebenen Teile sind Gewichtsteile.

## Beispiele

### 1. Eingesetzte Komponenten

A.
Lineares Polycarbonat auf Basis Bisphenol-A mit einer relativen Lösungsviskosität $\eta$rel von 1,26 bis 1,28, gemessen in $CH_2Cl_2$ bei 25 °C und einer Konzentration von 0,5 g/100 ml.

B.
Lineares Polyethylenterephthalat mit einer Intrinsic-Viskosität $[\eta]$ = 0,85 dl/g, gemessen in Phenol/o-Dichlorbenzol (1:1 Gewichtsteile) bei 25 °C und einer Konzentration von 0,5 g/dl.

C.
Pfropfpolymerisate

Pfropfgrundlagen:

C.a
Polybutadienlatex, hergestellt durch wäßrige Emulsionspolymerisation, mit einem Feststoffgehalt von

44,3 Gew.-%, einem mittleren Teilchendurchmesser $d_{50}$ von 0,4 µm und einem Gelgehalt von 86,5 Gew.-%.

Herstellung der Pfropfpolymerisate C:

In einem Reaktor werden 750 Teile Latex der Pfropfgrundlage C.a bzw. C.b vorgelegt. Anschließend verdünnt man jeweils mit soviel Wasser, bis sich ein Feststoffgehalt von 23,6 Gew.-% eingestellt hat. Bei einer Temperatur von 70 °C startet man die Polymerisation durch Zugabe einer Lösung von 7,5 Teilen Kaliumperoxydisulfat in 195 Teilen Wasser.

Danach werden folgende Mengenströme bei 70 °C unter Rühren innerhalb von 4 Stunden gleichmäßig in den Reaktor eindosiert:

750 Teile Monomermischung der Zusammensetzung aus Tabelle 1,
375 Teile Wasser,
15 Teile Na-Salz der disproportionierten Abietinsäure und
11,5 Teile wäßrige 1-n-Natronlauge.

Nach Beendigung der Zudosierung wird noch bei 70 °C nachpolymerisiert. Nach Stabilisierung des Latex mit 1,6 Gew.-% phenolischen Antioxidantien wird mittels Essigsäure/$MgSO_4$-Mischung bei Temperaturen von 70 bis 98 °C koaguliert. Nach Waschen und Reinigen der Pfropfpolymerisate wird zum trockenen Pulver aufgearbeitet.

Tabelle 1: verwendete Polymerisate

| Nr. | Pfropfgrundlage [50 Teile] | Zusammensetzung der Pfropfmonomeren [ Teile] S | ACN | n-BA | t-BA |
|---|---|---|---|---|---|
| C I 1) | C.a | 36 | 14 | - | - |
| C II | C.a | 31,68 | 12,32 | 5 | 1 |

S: Styrol
ACN: Acrylnitril
n-BA: n-Butylacrylat
t-BA: t-Butylacrylat

1) Vergleich

2. Herstellung und Prüfung der Formmassen:

Die Compoundierung der Komponenten A, B und C erfolgte auf einem 3-l-Innenkneter bei Temperaturen von 200 bis 220 °C.

Die Herstellung von Formkörpern erfolgte, soweit nicht anders angegeben, auf einer Spritzgießmaschine bei 260 ° C. Die Bestimmung der Kerbschlagzähigkeit erfolgte nach Methode Izod an Stäben der Abmessung 2,5 x 0,5 x 0,125 Zoll gemäß ASTM-D-256 bei Raumtemperatur und -20 ° C (Beispiele 1-3).

Zur Ermittlung der Fließnahtfestigkeit wurde die Schlagzähigkeit nach DIN 53 452 (Charpy-Methode) an der Bindenaht von beidseitig angespitzten Prüfkörpern der Abmessung 170 x 10 x 4 mm herangezogen.

Wie nachfolgende Tabelle 2 zeigt, werden nur mit den erfindungsgemäßen Formmassen Produkte erhalten, die eine gegenüber dem Stand der Technik verbesserte Fließnahtfestigkeit und Tieftemperaturzähigkeit aufweisen.

Tabelle 2: Zusammensetzung und Eigenschaften der Formmassen

| Beispiele | Komponenten A | B | CI | CII | Kerbschlagzähigkeit nach Izod (J/m) 25°C | -20°C | Fließnahtfestigkeit (kJ/m²) |
|---|---|---|---|---|---|---|---|
| | [Teile] | | | | | | |
| 1 1) | 67 | 22 | 11 | | 772 | 425 | 12,7 |
| 2 | 67 | 22 | | 11 | 833 | 520 | 15,1 |

1) Vergleichsbeispiel

**Patentansprüche**

**1.** Thermoplastische Formmassen aus

A. 10 bis 95 Gew.-% aromatischem Polycarbonat,

B. 5 bis 90 Gew.-% Polyalkylenterephthalat und C. 1 bis 70 Gew.-% Pfropfpolymerisat,
wobei sich die obigen Prozentangaben jeweils auf die Summe der Komponenten A und B beziehen,
dadurch gekennzeichnet, daß Komponente C ein Pfropfpolymerisat aus
5 bis 90 Gewichtsteilen Pfropfauflage aus
C.2 einer Mischung aus
C.2.1 50 bis 95 Gew.-Teilen Styrol, α-Methylstyrol, $C_1$-$C_4$-Alkyl- oder Halogen-kernsubstituiertem Styrol, Methylmethacrylat oder Mischungen daraus und
C.2.2 5 bis 50 Gew.-Teilen Acrylnitril, Methacrylnitril, Methylmethacrylat, Maleinsäureanhydrid, $C_1$-$C_4$-Alkyl bzw. Phenyl -N-substituiertem Maleinimid oder Mischungen daraus sowie
C.2.3 1 bis 40 Gew.-Teilen Acrylsäureester eines primären oder sekundären einwertigen aliphatischen $C_2$-$C_{10}$-Alkohols und/oder
C.2.4 0,1 bis 10 Gew.-Teilen Acryl- oder Methacrylsäureester des tert.-Butanols
auf
C.3 10 bis 95 Gew.-Teilen Polymerisat mit einer Glasübergangstemperatur unter -10 °C, ist.

**2.** Formmassen nach Anspruch 1, die - jeweils bezogen auf die Komponenten A und B -
50 bis 90 Gew.-% Komponente A,
10 bis 50 Gew.-% Komponente B und
3 bis 50 Gew.-% Komponente C enthalten.

**3.** Formmassen nach Anspruch 2, die - bezogen auf die Komponente A und B - 5 bis 35 Gew.-% Komponente C enthalten.

**4.** Formmassen nach Ansprüchen 1 bis 3, worin die Komponente C.2 3 bis 20 Gew.-Teile, bezogen auf die Summe C.2.1 und C.2.2, Komponente C.2.3 enthält.

**5.** Formmassen nach Ansprüchen 1 bis 4, worin die Komponente C.2 0,3 bis 4 Gew.-Teile, bezogen auf die Summe C.2.1 und C.2.2, Komponente C.2.4 enthält.

**6.** Verfahren zur Herstellung der Formmassen nach Ansprüchen 1 bis 5 durch Mischen der Komponenten bei erhöhter Temperatur.

**7.** Verwendung der Formmassen nach Ansprüchen 1 bis 6 zur Herstellung von Formkörpern.

## Claims

**1.** Thermoplastic moulding compositions of
A. 10 to 95% by weight aromatic polycarbonate,
B. 5 to 90% by weight polyalkylene terephthalate,
C. 1 to 70% by weight graft polymer,
the above percentages being based on the sum of components A and B,
characterized in that component C is a graft polymer of 5 to 90 parts by weight of a graft shell of
C.2 a mixture of
C.2.1. 50 to 95 parts by weight styrene, α-methyl styrene, $C_{1-4}$alkyl- or halogen-nucleus-substituted styrene, methyl methacrylate or mixtures thereof and
C.2.2 5 to 50 parts by weight acrylonitrile, methacrylonitrile, methyl methacrylate, maleic anhydride, $C_{1-4}$ alkyl- or phenyl-N-substituted maleic imide or mixtures thereof and
C.2.3 1 to 40 parts by weight of an acrylate of a primary or secondary monohydric aliphatic $C_{2-10}$ alcohol and/or
C.2.4 0.1 to 10 parts by weight of an acrylate or methacrylate of tert. butanol
on
C.3 10 to 95 parts by weight of a polymer having a glass transition temperature below -10 °C.

**2.** Moulding compositions as claimed in claim 1 containing - based in each case of components A and B -
50 to 90% by weight component A,
10 to 50% by weight component B and
3 to 50% by weight component C.

3. Moulding compositions as claimed in claim 2 containing 5 to 35% by weight component C, based on components A and B.

4. Moulding compositions as claimed in claims 1 to 3, in which component C.2 contains 3 to 20 parts by weight of component C.2.3, based on the sum of C.2.1 and C.2.2.

5. Moulding compositions as claimed in claims 1 to 4, in which component C.2 contains 0.3 to 4 parts by weight of component C.2.4, based on the sum of C.2.1 and C.2.2.

6. A process for the production of the moulding compositions claimed in claims 1 to 5 by mixing of the components at elevated temperature.

7. The use of the moulding compositions claimed in claims 1 to 6 for the production of moulded articles.

## Revendications

1. Compositions à mouler thermoplastiques, constituées de
   A. 10 à 95 % en poids de polycarbonate aromatique,
   B. 5 à 90 % en poids de polytéréphtalate d'alkylène et
   C. 1 à 70 % en poids de polymère greffé,
   les pourcentages indiqués ci-dessus se rapportant chacun à la somme des composants A et B,
   caractérisées en ce que le composant C est un polymère greffé de
   5 à 90 parties en poids d'un substrat de greffage constitué
   C.2 d'un mélange de
   C.2.1 50 à 95 parties en poids de styrène, d'$\alpha$-méthylstyrène, de styrène à substituant alkyle en $C_1$ à $C_4$ ou halogéno sur le noyau, de méthacrylate de méthyle ou de mélanges de ces composants et
   C.2.2 de 5 à 50 parties en poids d'acrylonitrile, de méthacrylonitrile, de méthacrylate de méthyle, d'anhydride d'acide maléique, de maléimide à substituant alkyle en $C_1$ à $C_4$ ou phényle sur l'azote ou de mélanges de ces composants
   C.2.3 de 1 à 40 parties en poids d'ester d'acide acrylique d'un alcool aliphatique monovalent primaire ou secondaire en $C_2$ à $C_{10}$ et/ou
   C.2.4 de 0,1 à 10 parties en poids d'ester d'acide acrylique ou méthacrylique du tertio-butanol sur
   C.3 10 à 95 parties en poids de polymère ayant une température de transition vitreuse inférieure à -10 °C.

2. Compositions à mouler suivant la revendication 1, qui contiennent
   50 à 90 % en poids de composant A,
   10 à 50 % en poids de composant B et
   3 à 50 % en poids de composant C
   chacun par rapport aux composants A et B.

3. Compositions à mouler suivant la revendication 2, qui contiennent 5 à 35 % en poids de composant C - par rapport aux composants A et B.

4. Compositions à mouler suivant les revendications 1 à 3, dans lesquelles le composant C.2 contient 3 à 20 parties en poids, par rapport à la somme de C.2.1 et de C.2.2, de composant C.2.3.

5. Compositions à mouler suivant les revendications 1 à 4, dans lesquelles le composant C.2 contient 0,3 à 4 parties en poids de composant C.2.4, par rapport à la somme de C.2.1 et C.2.2.

6. Procédé de production de compositions à mouler suivant les revendications 1 à 5, par mélange des composants à une température élevée.

7. Utilisation des compositions à mouler suivant les revendications 1 à 6 pour la production de pièces moulées.